# EUROPÄISCHE PATENTSCHRIFT

(11) **EP 1 779 643 B1**
(45) Veröffentlichungstag und Bekanntmachung des Hinweises auf die Patenterteilung: **07.10.2009**
(21) Anmeldenummer: 05772048.4
(22) Anmeldetag: 04.08.2005
(51) Int. Cl.: H04M 3/22, H04Q 11/04, H04L 29/06

(54) **VERFAHREN UND VORRICHTUNG ZUM NUTZDATENABGRIFF MULTIMEDIALER VERBINDUNGEN IN EINEM PAKETNETZ**
METHOD AND DEVICE FOR TAPPING THE USEFUL DATA OF MULTIMEDIA CONNECTIONS IN A PACKET NETWORK
PROCEDE ET DISPOSITIF DE PRISE DE DONNEES UTILES DE COMMUNICATIONS MULTIMEDIA DANS UN RESEAU A COMMUTATION PAR PAQUETS

(30) Priorität: 20.08.2004 DE 102004040480
(43) Veröffentlichungstag der Anmeldung: 02.05.2007
(73) Patentinhaber: Nokia Siemens Networks GmbH & Co. KG, 81541 München (DE)
(72) Erfinder: HOFFMANN, Klaus, 81735 München (DE); KREUSCH, Norbert, 82061 Neuried (DE); LANZINGER, Karl, 81476 München (DE); LÖBIG, Norbert, 64291 Darmstadt (DE)
(86) Internationale Anmeldenummer: PCT/EP2005/053826
(87) Internationale Veröffentlichungsnummer: WO 2006/021494

(56) Entgegenhaltungen:
- WO-A-01/05109
- US-A1- 2004 157 629
- COLIN PERKINS: "RTP" 2003, ADDISON-WESLEY. PEARSON EDUCATION , BOSTON, USA , XP002352474 Seite 67 - Seite 68 Seite 97 Seite 209 - Seite 211 Seite 216, Absatz 3 - Seite 217, Absatz 3

## Beschreibung

Neuere Kommunikationsarchitekturen, die paket- oder zellbasierte Verfahren wie beispielsweise Voice over IP (VoIP) oder Voice over ATM (VoATM) nutzen, sehen die Trennung der Verbindungssteuerung und Nutzkanalsteuerung vor. Die bislang über herkömmliche leitungsvermittelte Telekommunikationsnetze geführte Kommunikation zwischen ein/ mehreren Teilnehmern wie beispielsweise ISDN/ PSTN Teilnehmern wird dann über IP Netze geführt. Um eine Kommunikation mit herkömmlichen leitungsvermittelten Telekommunikationsnetzen z. B. PSTNs (Public Switched Telephone Networks) weiterhin zu ermöglichen, ist eine "Übersetzung" zwischen den beiden unterschiedlichen Transporttechnologieen erforderlich, die in Kopplungspunkten vorgenommen wird. An einem solchen Kopplungspunkt wird die erste Transporttechnologie für die Nutzinformation mittels spezieller, als Media Gateway (MG) bezeichneten Einrichtungen in die zweite Transporttechnologie umgewandelt.

Die Media Gateways selbst werden von zentralen Instanzen, den Media Gateway Controllern (MGC), gesteuert. Die zwischen zwei Media Gateway Controllern übertragenen Signalsierungsinformationen werden z. B. mittels eines BICC Protokolls (Bearer Independent Call Control Protokoll) oder SIP/SIP-T Protokolls transportiert. Die Media Gateway Controller dienen im Wesentlichen der Koordination der Media Gateways und überwachen/steuern Verbindungen (Bearerverbindungen) zwischen den Media Gateways. Die Steuerung der Media Gateways erfolgt z.B. mit Hilfe des MGCP (Media Gateway Controller Protocol) oder auch des H.248-Protokolls.

In dem Buch Colin Perkins: RTP, 2003, Addison-Wesley, Pearson Education, Boston, USA, XP002352474, Seite 209-223 wird die Übertragung multimedialer Daten in Form von mehreren, parallel existenten RTP Sessions beschrieben. Insbesondere werden audio und video Daten einer multimedialen Kommunikationsverbindung in zwei getrennten RTP Sessions übertragen. Die getrennte Übertragung von audio und video ist bedingt durch eine gewollt unterschiedliche Behandlung der beiden Nutzdatenströme auf der Transportebene des Netzes. Beispiele sind unterschiedliche Priorität, unterschiedliche quality-of-service (QoS), unterschiedliche error correction für die beiden Ströme. Durch die getrennte Übertragung ergibt sich das Interesse an der Synchronisation der beiden Ströme auf der Empfängerseite. Diese kann mit Hilfe des RTCP Protokolls und unter Verwendung einer Referenz-Clock-Information, die sendeseitig bereitgestellt und mittels RTCP zur empfängerseitigen Auswertung übertragen wird, herbeigeführt werden.

Bei paketbezogenen Verbindungen, insbesondere bei über das IP-Netz geführten Verbindungen, wird somit der Nutzdatenstrom außerhalb der Vermittlungsstelle direkt zwischen den beteiligten Teilnehmern oder Gateways geführt. Die gesetzlich vorgeschriebene Möglichkeit des Abgriffs der Nutzdaten (Lawful Interception, LI), im folgenden kurz mit LI bezeichnet, erfolgt üblicherweise über eine konventionellen Schnittstelle außerhalb des Paketnetzes in TDM Technik. Ein von einem abzuhörenden A-Teilnehmer ausgehender Ruf über das Paketnetz mit einer reinen Audioverbindung wird dann in einer TDM Schleife abgegriffen. Dies bedeutet, dass zunächst eine Wandlung nach TDM vorgenommen werden muss. Dort werden die Nutzdaten abgegriffen, zu den Bedarfsträgern (LEAs, Law Enforcement Agency), im folgenden kurz mit LEA bezeichnet, weitergeleitet, danach in ein IP Protokoll zurückverwandelt und dem gerufenen Teilnehmer (B-Teilnehmer) zugeführt.

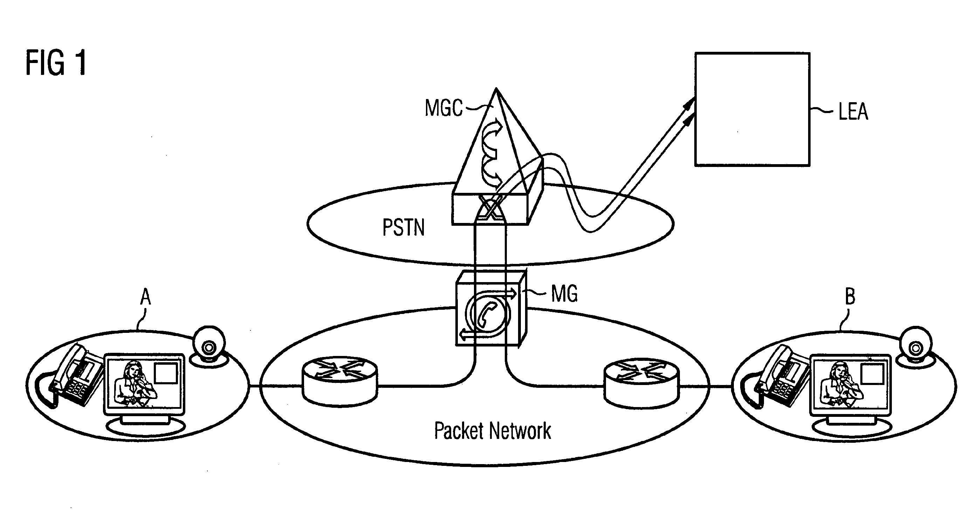

Die entsprechenden Verhältnisse sind in Fig. 1 aufgezeigt. Zum Abgriff der Sprachverbindungen im Paketnetz wird der Datenstrom über Mediagateways MG in einer Schleife zum TDM Netz und zurück geführt. Im TDM Netz wird der Datenstrom in bekannter Weise abgegriffen.

Die zweimalige Wandlung des Nutzdatenstromes bringt aber im Hinblick auf die end-to-end Qualität der übertragenen Nutzdaten gravierende Nachteile mit sich. Dies würde insbesondere auch für Videoinformationen gelten, die im Falle von Videotelephonie abzugreifen wären. Darüber hinaus lassen sich diese breitbandigen Nutzdaten (> 64kbit/s, z. B. Video) nicht problemlos ins schmalbandige TDM Netz überführen. Dies ist auch mit ein Grund, warum TDM Gateways nicht mit Video-Schnittstellen ausgerüstet sind.

Bei Videotelephonie entstehen gemischte Audio-/ Videonutzdaten. Sobald aber eine gemischte Audio- und Videoverbindung im Paketnetz aufgebaut wird, würde bei einem Abgriff via TDM-Wandlung der Video-Anteil/ Strom unterdrückt werden müssen. Damit ist die Teilnehmerverbindung jedoch stark beeinträchtigt (kein Video-Bild), und die Abhörfunktion wäre für den abgehörten Teilnehmer erkennbar. Es besteht daher für eine potentielle Videoverbindung de facto keine Möglichkeit des Abgriffs mehr, weder für Audio noch für Video. Nur statistische Daten und Signalisierungsdaten (Interception Related Information = IRI) des Rufs können gesichert werden.

Für die Praxis bedeutet dies, dass Teilnehmer nur solange abgehört werden können, so lange sie im TDM-Netz telephonieren. Da die Videotelephonie im Service-Angebot der Festnetzbetreiber mittlerweile einen festen Platz innehat, entsteht hier für das Leistungsmerkmal LI ein Problem, da im Paketnetz der zugehörige Video-Nutzdatenstrom dem Zugriff der LEAs (Law Enforcement Agency) entzogen ist. Mangels entsprechender Standards haben die LEAs zurzeit keine IP-basierten Schnittstellen. Die beabsichtigt schnelle und breite Einführung der Videotelephonie verschärft die Anforderungslage für LI in dieser Hinsicht.

Der Erfindung liegt die Aufgabe zugrunde, einen Weg aufzuzeigen, wie für multimediale Verbindungen das Leistungsmerkmal LI effizient eingesetzt werden kann.

Die Erfindung wird ausgehend von dem im Oberbegriff der Patentansprüche 1, 9 und 10 angegebenen Merkmalen durch die kennzeichnenden Merkmale gelöst.

Vorteilhaft an der Erfindung ist, dass eine Separierung von Audionutzdaten und Videonutzdaten vorgenommen wird. Dies kann beispielsweise durch einen zweifachen Verbindungsaufbau erfolgen, wobei die eine Verbindung als reine Audioverbindung eine zweite Verbindung als Videoverbindung ausgebildet ist. Falls das Endgerät die Vergabe unterschiedlicher Paketadressen im Rahmen einer einzigen Verbindung unterstützt, können alternativ zum Aufbau zweier Verbindung Audioanteil und Videoanteil auch über die Vergabe von unterschiedlichen Paketadressen im Rahmen einer Verbindung separiert werden.

Die Audionutzdaten werden dann über eine TDM-Schleife geführt und können klassisch abgegriffen werden. Hierbei ist besonders vorteilhaft, dass bereits vorhandene Einrichtungen gemäß dem Stand der Technik verwendet werden können. Dies gilt insbesondere für existierende Schnittstellen zu den LEAs, die existierende Interfaces verwenden können.

Das Auftrennen der Multimedia-Verbindung in zwei Rufe ist für den Teilnehmer ebenso wenig wahrnehmbar, wie die Vergabe unterschiedlicher Paketadressen bei einem Ruf. Lediglich im Falle von gestörter Lippensynchronität kann der Teilnehmer gegebenenfalls auf ein Abhören schließen. Wenn in diesem Fall ein geeigneter Wechsel des Audio-Codecs (e.g. G.711, G.726, G728, G.723.1, G.729) vorgenommen wird, ist damit auch diese Gefahr verringert.

Für die Videoverbindung werden zumindest Statistikdaten/ Signalisierungsdaten erfasst. Der Media Gateway Controller nimmt auf die Bandbreite des Videonutzdatenstroms im Hinblick auf Verteilbarkeit an LEAs über eine 64 kbit/s Schnittstelle keinerlei Einfluss, der Videonutzdatenstrom wird ausschliesslich im Paketnetz geführt. Insofern findet eine Beschränkung durch die Umwandlung der Videonutzdaten auf 64 kbit/s nicht statt, die der abgehörte Teilnehmer aufgrund der Qualitätsverschlechterung leicht erkennen würde.

Vorteilhafte Weiterbildungen der Erfindung sind in den Unteransprüchen angegeben.

Die Erfindung wird im folgenden anhand zweier figürlich dargestellten Ausführungsbeispiele näher erläutert.

Es zeigen:
- Fig 1: eine Netzkonfiguration mit PSTN/ ISDN Endgeräten, Media Gateways und Media Gateway Controllern und LEA's gemäß dem Stand der Technik,
- Fig 2: eine Vorrichtung gemäß der Erfindung, demgemäß zwei Verbindungen aufgebaut werden,
- Fig 3: die am Beispiel des SIP Protokolls verwendeten Signalisierungsnachrichten und Protokollelemente,
- Fig 4: eine Vorrichtung gemäß der Erfindung, demgemäß lediglich eine Verbindung aufgebaut werden,

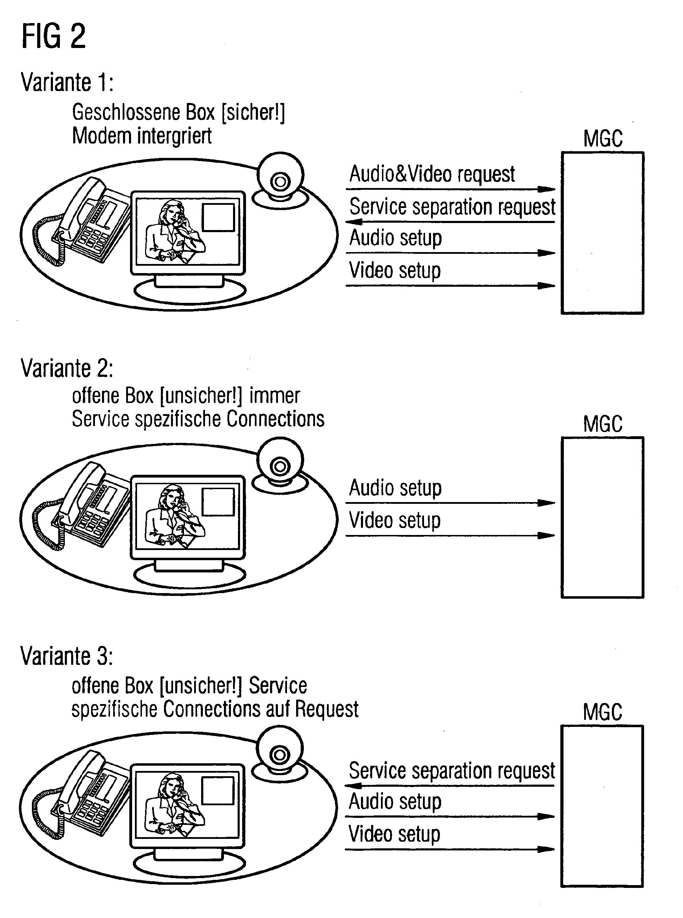

In Fig. 2 ist ein erstes Ausführungsbeispiel gemäß der Erfindung anhand dreier Varianten aufgezeigt. Allen Varianten gemein ist, dass das Endgerät eines Teilnehmers als Set-Top-Box ausgebildet und über eine Breitbandverbindung mit einem Media Gateway Controller MGC verbunden ist. Erfindungsgemäß wird nun bei Multimediarufen der Nutzdatenstrom (Bearerstrom) in zwei Ströme, den Audionutzdatenstrom und den Videonutzdatenstrom aufgetrennt. Beide Nutzdatenströme werden dann im folgenden unterschiedlich behandelt.

Der Audionutzdatenstrom wird über eine TDM-Schleife geführt und klassisch abgegriffen. Vorhandene Einrichtungen können verwendet werden, insbesondere existierende Schnittstellen zu den LEAs. Der Videonutzdatenstrom wird über das Paketnetz zwischen den beiden Teilnehmern geführt. Für den Video-Ruf werden lediglich die Rufdaten gesichert.

Gemäß der ersten Variante in Fig. 2a wird vom Media Gate Controller MGC erkannt, ob der Teilnehmer A gemäß LI abgehört werden soll. Hierzu wird im Media Gate Controller MGC eine entsprechende Liste geführt. Ergibt die Überprüfung, dass Teilnehmer A abgehört werden soll, wird dem Endgerät von Teilnehmer A signalisiert, dass für unterschiedliche Services (d.h. Audio/ Video ohne Audio) unterschiedliche Verbindungen aufzubauen sind. Hierzu wird die von Teilnehmer A vor dem Verbindungsaufbau dem Media Gate Controller MGC zugeführte Meldung "Audio & Video Request" mit einer Meldung "Service Separation Request" quittiert. Das Endgerät von Teilnehmer A baut daraufhin zwei Verbindungen auf, eine Audioverbindung und eine Videoverbindung. Da diese Vorgänge im Endgerät von Teilnehmer A im Prinzip festgestellt werden könnten" sollte das Engerät als geschlossene Box ausgebildet sein, die von außen nicht zugänglich ist.

In Fig.2b ist aufgezeigt, wie diese Signalisierung alternativ auch entfallen kann. Dies kann immer dann erfolgen, wenn die Endgeräte standardmäßig für verschiedene Services (d.h., reine Audioverbindung und reine Videoverbindung) getrennte Verbindungen anfordern. Da bei jedem Verbindungsaufbau immer zwei Verbindungen aufzubauen sind, kann das Endgerät offen ausgebildet und damit von außen zugänglich sein, da der Teilnehmer ein Abhören nicht bemerkt, da für diesen Fall im Endgerät keine gesonderte Signalisierung vorgesehen ist.

In Fig. 2c ist eine dritte Variante aufgezeigt. Hier wird stets eine vom Media Gateway Controller MGC initiierte Trennung durch die Meldung "Service Separation Request" vorgenommen. Dies ist für Endgeräte von Vorteil, die einen solchen Anstoss benötigen. Das Endgerät selbst kann als offene Box ausgestaltet sein, da der Teilnehmer ein Abhören auch hier nicht bemerkt.

Die Varianten beziehen sich auf die Funktionalität des betreffenden Endgerätes. Grundsätzlich ist allen Varianten gemein, dass die beiden Nutzdatenströme unterschiedlich behandelt und über unterschiedliche Pfade dem B-seitigen Endgerät zugeführt werden. Letzteres verknüpft die beiden Rufe wieder zu einem Ruf. Wird das durch die zweifache TDM /IP Wandlung erzeugte Delay zu groß, so dass die Gefahr besteht, dass die Lippensynchronität gestört wird, erfolgt optional ein geeigneter Wechsel des Codecs im Audiostrom. Die Entscheidung zum Wechsel zu einem geeigneten Codec im Audiostrom kann z. B. aufgrund einer Netzeigenschaft erfolgen.

Die beiden Rufe müssen nicht zwingend zum selben Zeitpunkt aufgebaut werden. So kann nach Teilnehmereingabe während eines TDM Rufs vom Endgerät gesteuert ein neuer Ruf über das IP-Netz aufgebaut werden, der die Audio- und Videonutzdaten überträgt. Der Teilnehmer kann damit beliebig zwischen der Audio und der Videoverbindung wechseln. Der erste Verbindungsaufbau erfolgt immer nur mit Audio-Service.

Als Signalisierungsprotokoll zum Teilnehmer wird beispielhaft das Standardprotokoll SIP verwendet. Die Erfindung ist auf dieses Protokoll aber nicht beschränkt, andere Protokolle wie H.323 oder H.248 können ebenso verwendet werden. Am Beispiel des Signalisierungsprotokolls SIP sollen nun noch die einzelnen Signalisierungsnachrichten und Protokollelemente aufgezeigt werden, die zur Realisierung nötig sind.

Der Media Gateway Controller MGC umfasst beispielhaft einen SIP Proxy Server und einen Vermittlungsrechner. Die Signalisierungsnachrichten zwischen Teilnehmer und Vermittlungsrechner werden über den SIP-Proxy Server geleitet. Der Vermittlungsrechner wiederum besteht aus einer vorgelagerten Einheit (PCU), die für die IP Schnittstelle and die Abhandlung der IP Protokolle zuständig ist und einem Vermittlungs-Core System, das nicht nur IP, sondern auch TDM Vermittlungstechnik steuern kann und für LI Rufe über eine TDM Schleife führen kann.

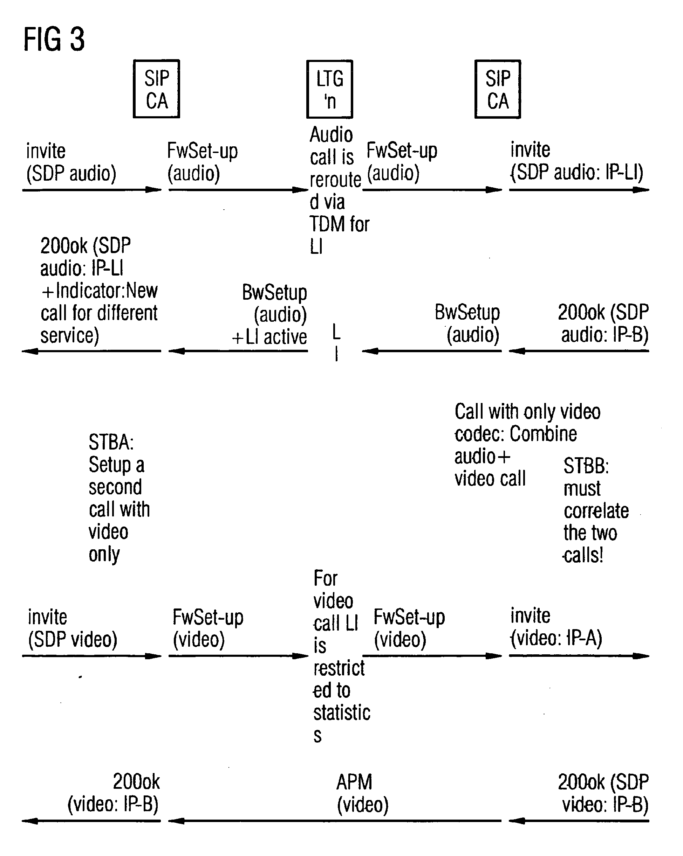

In Fig. 3 sind die Signalisierungsnachrichten und Protokollelemente anhand des SIP Protokolls aufgezeigt. Hierbei wird davon ausgegangen, dass der Abgriff A-seitig erfolgt: Zunächst wird eine erste SIP:INVITE Nachricht mit SDP Information (Audio Codecs) vom A-Teilnehmer zur vorgelagerten Einheit PCU gesendet. Diese INVITE Nachricht enthält sowohl die Rufnummer des Teilnehmers A als auch des Teilnehmers B. Damit weiß der Media Gateway Contoller MGC bereits mit dieser Nachricht, ob der Ruf abgegriffen werden soll.

Nachdem der A-seitige Media Gateway Contoller MGC erkannt hat, dass der Ruf abgegriffen werden soll, wird zum Endgerät signalisiert, dass für unterschiedliche Services verschiedene Rufe aufzubauen sind. Im Falle eines Abgriffs wird der Audio-Ruf über eine TDM Schleife klassisch erfasst. Bei Aufbau der Video-Verbindung wird ein neuer Ruf, wiederum durch eine SIP:IVITE Nachricht initiiert. Dieser Video-Ruf wird nicht über TDM Gateways geschleift, sondern es werden nur Statistikdaten erfasst. Das Endgerät auf der B-Seite verknüpft Audio- und Videonutzdaten wieder zu einem Ruf. Enthält bereits die erste INVITE Nachricht Audio- plus Video- Anforderungen, dann filtert die vorgelagerte Einheit PCU in einer 200ok Nachricht den Video-Codec aus und teilt gleichzeitig dem Endgerät mit, dass es für den Video-Strom einen neuen Ruf aufbauen soll. Das Endgerät initiiert damit sofort einen zweiten Ruf, nur mit Videonutzdaten. Der weitere Ablauf ist identisch mit dem oben beschriebenen.

Statistikdaten werden über X.25 oder IP (FTP) an die LEAs übertragen (HI2, Standard). Die Nutzdaten werden über 64 kbit/s-Verbindung mit DSS1-Signalisierung in Richtung LEA übertragen. Rufidentifizierende Information ist hierbei Teil der Subadresse in der Signalisierung oder es wird UUS1 verwendet (HI3, Standard).

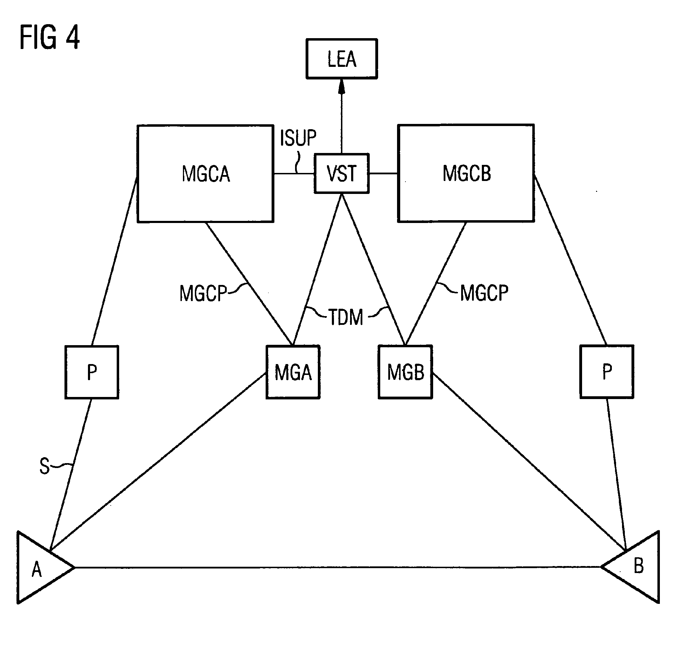

In Fig. 4 ist ein zweites Ausführungsbeispiel aufgezeigt. Demgemäß ist vorgesehen, statt zweier Verbindungen lediglich eine Verbindung für Audio und Video zu erstellen. Dies ist möglich, wenn die Signalisierung der Endgeräte es unterstützt, Audio - und Videonutzdaten an separate Paketadressen zu übertragen und umgekehrt in der Empfangsrichtung diese Nutzdatenströme von verschiedenen Paketadressen zu akzeptieren und wieder zusammenzuführen.

Im Folgenden wird nun angenommen, dass Teilnehmer A eine Audio-/ Videoverbindung zu Teilnehmer B aufzunehmen wünscht. Hierbei kann es sich bei den Teilnehmern A und B um SIP Teilnehmer oder H.323 Teilnehmer handeln, eine gemischte Variante ist ebenso möglich. Beispielhaft sei nun angenommen, dass es sich bei beiden Teilnehmern um SIP Teilnehmer handelt, und als Signalisierungsprotokoll das SIP Protokoll verwendet wird.

Teilnehmer A sendet zum Verbindungsaufbau eine Signalisierungsnachricht S zu einem zugeordneten Proxy-Server P. Dieser überprüft die Berechtigung des SIP Teilnehmers A und übergibt die Signalisierungsnachricht S an den zugeordneten Media Gateway Controller MGC A der A-Seite weiter.

Die Signalisierungsnachricht S ist im Falle des SIP Protokolls als INVITE Nachricht (im Falle des H.323 Protokolls als SETUP Nachricht) ausgebildet. Wesentlich hierbei ist, dass diese Nachricht Informationen bezüglich der eigenen Rufnummer (Calling Party Number), der gerufenen Rufnummer (Called Party Number) und eine Information darüber führt, ob eine reine Audioverbindung oder eine Audio/ Videoverbindung zu Teilnehmer B gewünscht ist. Ferner ist in der Videoinformation die IP Adresse des Teilnehmers A enthalten, die damit die Adresse definiert, an die der RTP Videonutzdatenstrom gesendet werden soll. Ferner sind hier auch Codec Informationen des Endgerätes abgelegt.

Im Media Gateway Controller MGC A der A-Seite wird nun überprüft, ob der rufende Teilnehmer A oder der gerufene Teilnehmer B ein Teilnehmer ist, der abgehört werden soll. Hierzu wird im Media Gateway Controller MGC A eine Liste geführt, die alle abzuhörenden Teilnehmer enthält. Soll Teilnehmer A abgehört werden, wird vom Media Gateway Controller MGC A ein Media Gateway MG A definiert, über das der Audionutzdatenstrom geführt werden soll. Dieses muss in der Lage sein, IP Informationen in TDM und umgekehrt zu wandeln. Im Folgenden wird nun vom Media Gateway MG A der A-Seite Teilnehmer A mitgeteilt, an welche IP Adresse (MG A) die Audioinformationen zu senden sind. Dies ist zumeist dieselbe Adresse, von der Teilnehmer A die Audionutzdaten der Gegenseite (Teilnehmer B) später empfängt.

Der Audioanteil der Signalisierungsnachricht S ist nun bearbeitet, es ist nun noch die Videoinformationen dem Endgerät von Teilnehmer B zuzuführen. Diese werden über TDM der B-Seite zugeführt. Als TDM Protokoll wird beispielhaft das ISUP Protokoll verwendet. Hier wird nun ein neuer Parameter definiert, der im ISUP Protokoll die Videoinformationen (d. h. der verwendete Video Codec, IP Adresse und Port des Video RTP Datenstromes) übernimmt und über TDM dem Media Gateway Controller MGC B der B-Seite überträgt. Dieser erhält nun zum einen die quasi getunnelte Nachricht mit Videoinformation des Teilnehmers A. Zum anderen wird er zusätzlich zur Videoverbindungsinformation über TDM angestoßen, eine Audioverbindung zum Teilnehmer B parallel dazu zu schalten. Der Media Gateway Controller MGC B erzeugt daraufhin eine INVITE Nachricht. Ferner werden die getunnelten Videoinformationen in diese INVITE Nachricht eingefügt und dem Teilnehmer B zugeführt.

Ferner wird ein Media Gateway MG B der B-Seite festgelegt, soweit dieses noch nicht definiert ist, über das die Audionutzdaten zum Teilnehmer B geführt werden. Das Media Gateway MG B der B-Seite teilt nun dem Teilnehmer B die IP Adresse, an die dieser seine Audionutzdaten zu übertragen hat. Dies ist zumeist die gleiche Adresse, von der Teilnehmer B die Audionutzdaten der Gegenseite (Teilnehmer A) erhält.

Von Teilnehmer B wird dies mit einer 200 ok Nachricht an Teilnehmer A quittiert. Der Videoanteil wird - wie oben beschrieben - im ISUP mit einem neuen Parameter über TDM übertragen (getunnelt) und Teilnehmer A zugeführt. Der Audioanteil wird wie bei einem normalen Audiocall dem B-seiten Media Gateway MG B zugestellt, in TDM übersetzt, und der TDM Anteil wiederum durch das A-seitige Media Gateway MG A in den RTP Datenstrom übersetzt, und damit dem A-Teilnehmer zugeliefert.

Erst danach kann die Videoverbindung aufgebaut werden. Teilnehmer A sendet nun in einer einzigen Verbindung Videopakete an die IP Adresse von Teilnehmer B, und Audiopakete an die Adresse des Media Gateway MG A der A-Seite. Dort werden die Audionutzdaten zu TDM Signalen gewandelt und zur TDM Vermittlungsstelle Vst mit LI Funktionalität der A-Seite weitergeleitet, wo der Abgriff erfolgt. Im Weiteren werden die Audionutzdaten als TDM Signale der TDM Vermittlungsstelle Vst mit LI Funktionalität der B-Seite übergeben, wo sie zum Media Gateway MG B weitergeleitet werden. Hier erfolgt die Umwandlung der TDM Signale in IP Pakete, die zum Teilnehmer B weitergeleitet werden. Das Endgerät von Teilnehmer B hat dann noch die Aufgabe, Audionutzdaten und Videonutzdaten zusammenzuführen.

Im Folgenden werden am Beispiel des SIP Protokolls die SDP Datenänderungen im Detail aufgezeigt:
Ein SIP A-Teilnehmer sendet folgendes SDP an den MGC
   v=0
   o=carol 28908764872 28908764872 IN IP4 100.3.6.6
   s=-
   t=0 0
   c=IN IP4 192.0.2.4
   m=audio 49170 RTP/AVP 0
   a=rtpmap:0 PCMU/8000
   m=video 51372 RTP/AVP 34
   a=rtpmap:34 H263/90000

Der MGC erkennt die Notwendigkeit eine LI Abgriffs und wechselt zu TDM und wieder zurück ins Packet Protokoll. Deshalb sendet der MGC folgendes SDP an den B-Tln.

| | | |
|---|---|---|
| v=0 | | |
| o=hiE 1 1 IN IP4 100.3.6.6 | | |
| s=- | | |
| t=0 0 | | |
| m=audio 3870 RTP/AVP 0 | Anmerkung : | vom MG |
| c=IN IP4 193.0.1.1 | Anmerkung : | vom MG |
| a=rtpmap:0 PCMU/8000 m=video 51372 RTP/AVP 34 | Anmerkung : | Tunnel Information |
| c=IN IP4 192.0.2.4 | Anmerkung : | Tunnel Information |
| a=rtpmap:34 H263/90000 | | |

Der B-Teilnehmer antwortet in Richtung MGC:
v=0
o=bob 28908764872 28908764872 IN IP4 101.3.6.6
s=-
t=0 0
c=IN IP4 191.0.2.4
m=audio 49171 RTP/AVP 0
a=rtpmap:0 PCMU/8000
m=video 51373 RTP/AVP 34
a=rtpmap:34 H263/90000

Der MGC antwortet durch die Konversion des Audioanteils in TDM und wieder in das Packet Protokoll in Richtung A-Teilnehmer:

| | | |
|---|---|---|
| v=0 | | |
| o=hiE 1 1 IN IP4 100.3.6.6 | | |
| s=- | | |
| t=0 0 | | |
| m=audio 49171 RTP/AVP 0 | Anmerkung : | vom MG |
| c=IN IP4 192.0.1.1 | Anmerkung : | vom MG |
| a=rtpmap:0 PCMU/8000 m=video 51373 RTP/AVP 34 | Anmerkung : | Tunnel Information |
| c=IN IP4 191.0.2.4 | Anmerkung : | Tunnel Information |
| a=rtpmap:34 H263/90000 | | |

Letztlich wird beispielhaft eine Mappingtabelle zwischen SIP auf ISUP und ISUP auf SIP aufgezeigt:

| SIP | ISUP/BICC | SIP |
|---|---|---|
| INVITE mit Videoinformation und Audioinformation → | IAM mit neuem Parameter der die Videoinformation transportiert → | INVITE mit Videoinformation und Audioinformation |
| ←18x mit Videoinformaton und Audioinformation | ← ACM/CPG mit neuem Parameter der die Videoinformation transportiert | ←18x mit Videoinformation und Audioinformation |
| ←200 mit Videoinformation und Audioinformation | ← ANM mit neuem Parameter der die Videoinformation transportiert | ←200 mit Videoinformation und Audioinformation |

Das Mapping der Audioinformation wird hier nicht explizit beschrieben, da dies durch die ITU-T Recommendations Q.1902.x (BICC) bzw. Q.1912.5 und IETF RFC3398 (jeweils SIP/ ISUP mapping) bekannt ist.

Das zweite Ausführungsbeispiel wurde am Beispiel des ISUP Protokolls als konventionelles TDM Protokoll beschrieben. Dies ist jedoch keine Einschränkung. So kann als konventionelles TDM Protokoll ebenso DSS1 oder auch TUP oder ähnliches verwendet werden. Gleiches gilt für das mapping von und zu dem IP Protokoll. Der Kern der Sache ist, dass die Endgeräte nicht zweimal signalisieren für Audio und Video getrennt, sondern mit der Audio-Signalisierung die Video-Endpointdaten mit getunnelt werden über TDM (weil Audio wegen LI über TDM geführt wird). Dazu wird der neue Parameter im ISUP benutzt. Das Aufsplitten der Nutzdatenströme steuert nun die PCU alleine und nicht wie im ersten Ausführungsbeispiel die Endgeräte selbst.

Schließlich wird die Erfindung am Beispiel der Videotelephonie beschrieben, wo zwei Verbindungen - eine Audioverbindung und eine Bildverbindung - zum Tragen kommen. Die Erfindung ist aber nicht auf zwei Verbindungen beschränkt. So kann auch eine dritte Verbindung wie z. B. eine Datenverbindung oder gar weitere Verbindungen zum Tragen kommen, die dann entsprechend abgehört werden können.

## Patentansprüche

1. Verfahren zum Nutzdatenabgriff multimedialer Verbindungen in einem Paketnetz, über das Audionutzdaten und weitere Nutzdaten übertragen werden,
- bei dem die Audionutzdaten und weiteren Nutzdaten separiert werden,
- bei dem die Audionutzdaten über eine TDM Schleife geführt werden, wo sie abgegriffen werden,
- bei dem die weiteren Nutzdaten direkt über das Paketnetz dem Empfänger zugeführt werden, wo die separierten Audionutzdaten und weiteren Nutzdaten wieder zusammengeführt werden.

2. Verfahren nach Anspruch 1,
**dadurch gekennzeichnet,**
**dass** die Separierung der Audionutzdaten und weiteren Nutzdaten durch den Aufbau wenigstens zweier Verbindungen erfolgt.

3. Verfahren nach Anspruch 1,
**dadurch gekennzeichnet,**
**dass** die Separierung der Audionutzdaten und weiteren Nutzdaten durch Vergabe wenigstens zweier Paketadressen im Rahmen einer einzigen Verbindung erfolgt.

4. Verfahren nach Anspruch 1 bis 3,
**dadurch gekennzeichnet,**
**dass** die Separierung der Audionutzdaten und weiteren Nutzdaten im Endgerät vorgenommen wird.

5. Verfahren nach Anspruch 1 bis 4,
**dadurch gekennzeichnet,**
**dass** in einem konventionellen TDM Protokoll ein Parameter und ein mapping von und zu dem IP Protokoll definiert wird, der Videoinformationen übernimmt, womit diese zwischen wenigstens zwei Endgeräten ausgetauscht werden.

6. Verfahren nach einem der vorstehenden Ansprüche,
**dadurch gekennzeichnet,**
**dass** die weiteren Nutzdaten als Videonutzdaten einer multimedialen Verbindung ausgebildet sind.

7. Verfahren nach Anspruch 6,
**dadurch gekennzeichnet,**
**dass** im Rahmen der Zusammenführung von Audio- und Videonutzdaten Laufzeitdelays zwischen Audiostrom und Videostrom durch geeignete Wahl der benutzten Kodierverfahren verringert werden.

8. Verfahren nach einem der Ansprüche 1 bis 5,
**dadurch gekennzeichnet,**
**dass** die weiteren Nutzdaten als Nutzdaten einer Datenverbindung ausgebildet sind.

9. Vorrichtung zum Nutzdatenabgriff multimedialer Verbindungen in einem Paketnetz, die Audionutzdaten und weitere Nutzdaten überträgt,
- bei der die Audionutzdaten über eine TDM Schleife geführt werden, wo sie abgegriffen werden, und
- bei der Mittel zum Erstellen und Wiederzusammenführen wenigstens zweier getrennter Verbindungen vorgesehen sind, so dass Audionutzdaten und weitere Nutzdaten separat über jeweils eine Verbindung geführt werden können.

10. Vorrichtung zum Nutzdatenabgriff multimedialer Verbindungen in einem Paketnetz, die Audionutzdaten und Videonutzdaten überträgt,
- bei der die Audionutzdaten über eine TDM Schleife geführt werden, wo sie abgegriffen werden, und
- bei der Mittel zum Erstellen und Wiederzusammenführen von Audio- und Videonutzdatenstrom vorgesehen sind, so dass Audionutzdaten und Videonutzdaten separat über jeweils eine Verbindung geführt werden können und Laufzeitdelays zwischen Audio- und Videostrom im Rahmen der Zusammenführung verringert werden können.

## Claims

1. Method for tapping off useful data from multimedia connections in a packet network which is used to transmit audio useful data and further useful data,
- in which the audio useful data and further useful data are separated,
- in which the audio useful data are routed via a TDM loop where they are tapped off,
- in which the further useful data are supplied directly by means of the packet network to the receiver, where the separated audio useful data and further useful data are reunited.

2. Method according to Claim 1,
**characterized**
**in that** the audio useful data and further useful data are separated by the setup of at least two connections.

3. Method according to Claim 1,
**characterized**
**in that** the audio useful data and further useful data are separated by allocating at least two packet addresses within the context of a single connection.

4. Method according to Claims 1 to 3,
**characterized**
**in that** the audio useful data and further useful data are separated in the terminal.

5. Method according to Claims 1 to 4,
**characterized**
**in that** a conventional TDP protocol is used to define a parameter and mapping from and to the IP protocol, said parameter taking on video information and this being used to interchange said video information between at least two terminals.

6. Method according to one of the preceding claims,
**characterized**
**in that** the further useful data are in the form of video useful data on a multimedia connection.

7. Method according to Claim 6,
**characterized**
**in that** in the course of the reuniting of audio and video useful data, propagation delays between audio stream and video stream are reduced through suitable selection of the encoding methods used.

8. Method according to one of Claims 1 to 5,
**characterized**
**in that** the further useful data are in the form of useful data on a data connection.

9. Apparatus for tapping off useful data from multimedia connections in a packet network which transmits audio useful data and further useful data,
- in which the audio useful data are routed via a TDM loop where they are tapped off, and
- in which means for creating and reuniting at least two separate connections are provided, so that audio useful data and further useful data can be routed separately via a respective connection.

10. Apparatus for tapping off useful data from multimedia connections in a packet network which transmits audio useful data and video useful data,
- in which the audio useful data are routed via a TDM loop where they are tapped off, and
- in which means for creating and reuniting the audio and video useful data streams are provided, so that audio useful data and video useful data can be routed separately via a respective connection and propagation delays between the audio and video streams can be reduced in the course of the reuniting.

## Revendications

1. Procédé pour le prélèvement de données utiles de communications multimédia dans un réseau à commutation de paquets, par lequel des données utiles audio et d'autres données utiles sont transmises,
- dans lequel les données utiles audio et d'autres données utiles sont séparées,
- dans lequel les données utiles audio sont guidées au moyen d'une boucle TDM où elles sont prélevées,
- dans lequel les autres données utiles sont amenées directement par le réseau de commutation par paquets au destinataire, où les données utiles audio séparées et autres données utiles sont à nouveau regroupées.

2. Procédé selon la revendication 1,
**caractérisé en ce que**
la séparation des données utiles audio et autres données utiles s'effectue par l'établissement d'au moins deux communications.

3. Procédé selon la revendication 1,
**caractérisé en ce que**
la séparation des données utiles audio et autres données utiles s'effectue par l'attribution d'au moins deux adresses de paquet dans le cadre d'une seule communication.

4. Procédé selon les revendications 1 à 3,
**caractérisé en ce que**
la séparation des données utiles audio et autres données utiles est effectuée dans le terminal.

5. Procédé selon les revendications 1 à 4,
**caractérisé en ce que**
dans un protocole TDM classique sont définis un paramètre et une cartographie en provenance et en direction du protocole IP, qui prend en charge des informations vidéo, de sorte que celles-ci sont échangées entre au moins deux terminaux.

6. Procédé selon l'une quelconque des revendications précédentes,
**caractérisé en ce que**
les autres données utiles sont conçues sous forme de données utiles vidéo d'une communication multimédia.

7. Procédé selon la revendication 6,
**caractérisé en ce que**,
dans le cadre du regroupement de données utiles audio et de données utiles vidéo, les temps de parcours entre le flux audio et le flux vidéo sont réduits par un choix approprié des procédés de codage utilisés.

8. Procédé selon l'une quelconque des revendications 1 à 5,
**caractérisé en ce que**
les autres données utiles sont conçues sous forme de données utiles d'une communication de données.

9. Dispositif pour le prélèvement de données utiles de communications multimédia dans un réseau à commutation par paquets, qui transmet des données utiles audio et d'autres données utiles,
- sur lequel les données utiles audio sont guidées au moyen d'une boucle TDM où elles sont prélevées, et
- sur lequel il est prévu des moyens pour l'établissement et le regroupement d'au moins deux communications séparées, de telle sorte que des données utiles audio et d'autres données utiles peuvent être guidées séparément au moyen d'une communication respective.

10. Dispositif pour le prélèvement de données utiles de communications multimédia dans un réseau à commutation par paquets, qui transmet des données utiles audio et des données utiles vidéo,
- sur lequel les données utiles audio sont guidées au moyen d'une boucle TDM où elles sont prélevées, et
- sur lequel il est prévu des moyens pour l'établissement et le regroupement du flux de données utiles audio et du flux de données utiles vidéo, de sorte que des données utiles audio et des données utiles vidéo peuvent être guidées séparément au moyen d'une communication respective et les temps de parcours entre le flux audio et le flux vidéo peuvent être réduits dans le cadre du regroupement.
